# EUROPEAN PATENT SPECIFICATION

(11) **EP 3 806 297 B1**
(45) Date of publication and mention of the grant of the patent: **06.12.2023**
(21) Application number: 19472002.5
(22) Date of filing: 11.10.2019
(51) Int. Cl.: H02K 15/00

(54) **METHOD AND DEVICE FOR TWISTING A WINDING HEAD OF A STATOR**
VERFAHREN UND VORRICHTUNG ZUM VERDREHEN EINES WICKLUNGSKOPFES EINES STATORS
PROCÉDÉ ET DISPOSITIF D'ENROULEMENT D'UNE TÊTE DE BOBINE D'UN STATOR

(43) Date of publication of application: 14.04.2021
(73) Proprietor: Ameka Ltd, 1336 Sofia (BG); Vitesco Technologies Germany GmbH, 93055 Regensburg (DE)
(72) Inventor: Beyer, Detlef, 81737 Munich (DE); Radtke, Christoph, 81737 Munich (DE); Paligorov, Todor, 1336 Sofia (BG)
(74) Representative: Vitesco Technologies

(56) References cited:
- WO-A1-2019/161846
- US-A1- 2014 035 404

## Description

The invention relates to a method for twisting a winding head of a stator, wherein during a twisting process of an end section of conductors of the winding resp. stator, protruding over an end face of a stator core, a distance of the conductors to each other in radial direction of the stator core is at least partially enlarged. Furthermore, the invention relates to a device for twisting a winding head of a stator.

Methods for twisting a winding head of a stator with hairpin, or I-pin technology are well known. Usually, the stator comprises a stator core and a plurality of conductors, which are arranged in slots of the stator core. The stator core usually comprises a plurality of lamination stacks, which are stacked together forming the stator core.

The slots are arranged on an inner surface of the stator core, extending between a first end face of the stator and a second end face of the stator being spaced to the first end face. Furthermore, the slots are arranged in peripheral direction of the stator spaced to each other. A first row of conductors and a second row of conductors are arranged in the slots, wherein the first conductors and the second conductors are arranged in radial direction of the stator core next to each other. The conductors of the first row and the second row protrude over the first end face of the stator core. These conductor ends are twisted in peripheral direction of the stator core wherein the first conductor ends are twisted clockwise, and the second conductor ends are twisted counterclockwise. During the twisting process of the conductor ends, a coating of the conductors is stressed by friction and might crack. For avoiding any shorting, an isolation paper is placed between the first row and the second row of the conductors. However, the arrangement of an isolation paper is sometimes difficult and time consuming.

EP 1 376 818 A2 describes a method for twisting a winding head of a stator having a radial gap between the conductors. According to the described method, a tail side coil end includes a plurality of tail conductor pairs sequentially disposed with predetermined radial gaps. The radial gaps between the conductor pairs are widened near the end surface of a stator core. This arrangement prevents adjacent tail joint portions or adjacent slanting portions from undesirably contacting with each other, thereby adequately maintaining electric insulation between the tail conductor pairs and improving the space factor of the slot. However, the document does not describe how the radial gaps between the conductor pairs are widened and how this gap can be reliably shaped during and/or after the twisting process of the conductor pairs.

WO 2019 161 846 A1 discloses a:

Twisting device for twisting a winding head of a stator, comprising a holding device for holding a hollow cylindrical stator core having a first end face and a second end face being spaced apart to each other in longitudinal direction of the stator core, and an inner surface facing a longitudinal axis of the stator core with a least one slot on the inner surface extending between first end face and the second end face having a slot depth in radial direction of the stator core, wherein at least a first conductor and a second conductor is positioned in the slot in radial direction of the stator core next to each other, wherein at least an end section of the conductors protrudes and/or extends over the first end face of the stator core, further comprising a twisting tool having at least one slot for receiving a distal end of the end section of the first conductor facing away from the first end face for twisting the end section of the first conductor in peripheral direction of the stator core.

US 2014 0 035 404 A1 describes an angled weld end turns for coolant access.

It is an object of the present invention to provide a method and a device for twisting a winding head of a stator, wherein the danger of shorting of the twisted conductor ends of the stator can be easily reduced.

This object is achieved by the subject matter of the independent claims. Preferred embodiments of the invention are subject matter of the dependent claims or described hereinafter.

According to the invention, a method for twisting a winding head of a stator is provided, comprising the steps of claim 6.

In other words, according to that method, a hollow cylindrical stator core is provided. Usually, the stator core comprises a plurality of lamination stacks, arranged next to each other, forming the stator core. The stator core comprises a first end face and a second end face, wherein the first end face is spaced apart to the second end face in longitudinal direction of the stator core. The longitudinal direction of the stator core corresponds to the longitudinal axis of the cylindrical stator core. At least a slot is arranged on an inner surface of the stator core facing the longitudinal axis of the stator core, wherein the slot extends between the first end face and the second end face having a slot depth in radial direction of the stator core. Preferably, the stator core comprises a plurality of slots on the inner surface, wherein the slots are spaced to each other in peripheral direction of the stator core.

At least a first conductor and a second conductor are arranged in the slot in radial direction of the stator core next to each other. In other words, the first conductor is arranged on an imaginary first circle having its circle center on the longitudinal axis of the stator core. The second conductor is arranged on an imaginary second circle, having a diameter smaller than the first circle, and having its circle center on the longitudinal axis of the stator core. At least an end section of the first conductor and an end section of the second conductor protrude and/or extend over the first end face of the stator core. Preferably, a plurality of first conductors and a plurality of second conductors are provided. More preferably, the plurality of first conductors is arranged in peripheral direction of the stator core on the first imaginary circle, wherein the plurality of first conductors defines a first conductor row. The plurality of first conductors might be arranged next to each other and/or spaced apart to each other in peripheral direction of the stator core. The plurality of the first conductors can be arranged in such a way that only one conductor of the first conductors is arranged in the slot of the stator core. However, it is also possible that more than one first conductor is arranged in the slot of the stator core in peripheral direction of the stator core. Preferably, the plurality of second conductors is arranged in peripheral direction on the first imaginary circle, wherein the plurality of second conductors defines a second conductor row. More preferably, the plurality of second conductors is arranged next to each other and/or spaced apart to each other in peripheral direction of the stator core. The plurality of the second conductors can be arranged in such a way that only one conductor of the second conductors is arranged in the slot of the stator core. However, it is also possible that more than one second conductor is arranged in the slot of the stator core in peripheral direction of the stator core.

A winding core is arranged on the stator, the stator core and/or the first end face of the stator core. In other words, the winding core is arranged on the stator core resp. the end face in longitudinal direction of the stator core. The winding core might have a cylindrical or a hollow cylindrical structure and/or shape. The winding core comprises at least one cam. Preferably, the cam protrudes in radial direction outwardly. However, it is also possible that the cam protrudes in radial direction inwardly. Preferably, the winding core comprises a plurality of cams wherein the cams are spaced to each other in peripheral direction of the winding core. The winding core can also be named as a necking tool.

After arranging the winding core on the stator, resp. the end face of the stator core, the end section of the first conductor is twisted in peripheral direction of the stator core. Due to that twisting process, the end section of the first conductor is moved over the cam, wherein a part of the end section of the first conductor, between the first end face of the stator core and a distal end of the end section of the first conductor facing away from the first end face, is bent and/or necked in radial direction of the stator core in such a way, that a distance between the end section of the first conductor and the end section of the second conductor in radial direction of the stator core is at least partially enlarged with respect to the distance of the first and second conductor in radial direction of the stator core, which are arranged in the slot. Thus, due to the winding core and especially the cam arranged on the winding core, the end section of the first conductor is bent and/or necked either in radial direction outwardly or in radial direction inwardly, enlarging the radial gap between the end section of the first conductor and the end section of the second conductor. Hence, the danger of shorting of the twisted conductor ends of the stator can be easily reduced.

According to the invention, the cam comprises a sliding surface arranged and configured in such a way that by twisting the end section of the first conductor in peripheral direction of the stator core, the end section is at least partially moved over the sliding surface and thereby at least partially bent radially outward for necking the first conductor. Hence, the cam comprises a ramp structure for guiding the end section of the first conductor when twisted in peripheral direction or the stator core. Thus, the turning resistance of the twisting tool in peripheral direction of the stator core can be reduced. Furthermore, the end section of the first conductor can be bent in radial direction carefully and/or gently for avoiding any damage of an isolation on the first conductor.

The conductors usually have a rectangular shape in a cross section. However, the conductors can also have a round shape or any other type of cross section.

The winding core resp. the necking tool is only used for the twisting process for bending and/or necking the end section of the first conductor. After twisting the end section of the first conductor in peripheral direction of the stator core, the winding core is removed from the stator.

In a preferred embodiment of the invention, only the part of the end section between the distal end of the end section of the first conductor and the first end face of the stator comprises an enlarged distance to the end section of the second conductor in radial direction of the stator core. For example, the radial distance between the distal end of the first conductor and the distal end of the second conductor corresponds to the radial distance of the first conductor and the second conductor being arranged in the slot and only the twisted part of the end section of the first conductor between the distal end and the first end face of the stator is bent and/or necked radially outward providing an enlarged gap in radial direction to the respective part of the end section of the second conductor. Hence, the distal ends of the first conductor and the second conductor can be electrically connected easily.

In a preferred embodiment of the invention, the end section of the first conductor is at least partially deflected and/or bent in radial direction of the stator core by a split tool. It is conceivable that the end section of the first conductor is deflected and/or bent over its total length in radial direction outwardly. The split tool is inserted in longitudinal direction of the stator core between the end section of the first conductor and the end section of the second conductor. Due to a movement of the split tool in peripheral direction relative to the stator core, the end section of the first conductor is at least partially bent in radial direction outwardly. Hence, by deflecting and/or bending the end section of the first conductor in radial direction of the stator, the distal end of the end section can be shifted into a slot of a twisting tool for twisting the end section of the first conductor in peripheral direction of the stator core.

The split tool might be arranged and designed in such a way that the end section of the first conductor is deflected and/or bent over its total length in radial direction outwardly. According to a preferred embodiment of the invention, the split tool is designed as a split ring. The split ring can be easily arranged between the end section of the first conductor and the end section of the second conductor and shifted in peripheral direction of the stator core for deflecting the end section of the respective conductor in radial direction.

In a preferred embodiment of the invention, the end section of the first conductor is twisted in peripheral direction of the stator core by a twisting tool having at least one slot for receiving the distal end of the end section. Preferably, the twisting tool comprises a plurality of slots being spaced apart in peripheral direction of the twisting tool, wherein the slots are arranged and configured for receiving the distal ends of the end sections of the conductors of the first conductor row.

It is conceivable that the at least one slot comprises an opening on an end surface of the twisting tool facing the distal end of the end section of the first conductor. Such a slot, having only one opening at the end surface of the twisting tool is called a closed slot. Hence, after the end section of the first conductor is deflected in radial direction, the twisting tool is positioned in such a way that the end of the first conductor enters at least partially the slot via the opening. After entering into the slot, the twisting tool is twisted in peripheral direction of the stator core.

According to a preferred embodiment of the invention, the slot is configured as a cut. Preferably, the cut reaches through the wall thickness of the hollow cylindrical twisting tool. Such a slot is called an open slot. Hence, for example, the twisting tool is arranged on the end section of the first conductor before deflecting the end section in radial direction outwardly. After deflecting the end section of the first conductor in radial direction outwardly, the distal end of the end section of the first conductor is deflected and/or shifted into the open slot of the twisting tool. After entering the slot by the defection of the end section of the first conductor end, the twisting tool is twisted in peripheral direction of the stator core.

In a form not being part of the present invention ("form" in the following) the twisting step is carried out time shifted to the splitting step. In other words, the splitting and/or deflecting step for at least partially deflecting the end section of the first conductor in radial direction is carried out prior to the twisting step. However, after deflecting the end section of the first conductor radially outward in such a way that the distal end of the end section of the first conductor is defected and/or shifted into the open slot of the twisting tool, the split tool and the twisting tool are twisted together, respectively simultaneously, in the same direction.

It is conceivable that the stator comprises further conductors resp. conductor rows. Preferably, the stator comprises a third conductor and a fourth conductor. In other words, the third conductor is arranged on an imaginary third circle having its circle center on the longitudinal axis of the stator core. The diameter of the imaginary third circle is smaller than the diameter of the imaginary second circle of the second conductors. The fourth conductor is arranged on an imaginary fourth circle having the same circle center as the imaginary third circle, wherein the diameter of the fourth circle is smaller than the diameter of the imaginary third circle.

Preferably, a plurality of third conductors and a plurality of fourth conductors are provided. The third conductors arranged in peripheral direction of the stator core spaced to each other on the third imaginary circle, wherein the plurality of third conductors defines a third conductor row. The fourth conductors are arranged in peripheral direction of the stator core spaced to each other on the fourth imaginary circle, wherein the plurality of fourth conductors defines a fourth conductor row.

Preferably, the plurality of third conductors is arranged in peripheral direction of the stator core on the third imaginary circle, wherein the plurality of third conductors defines a third conductor row. More preferably, the plurality of third conductors is arranged next to each other and/or spaced apart to each other in peripheral direction of the stator core. The plurality of the third conductors can be arranged in such a way that only one conductor of the third conductors is arranged in the slot of the stator core. However, it is also possible that more than one third conductor is arranged in the slot of the stator core in peripheral direction of the stator core.

Preferably, the plurality of fourth conductors is arranged in peripheral direction of the stator core on the fourth imaginary circle, wherein the plurality of fourth conductors defines a fourth conductor row. More preferably, the plurality of fourth conductors is arranged next to each other and/or spaced apart to each other in peripheral direction of the stator core. The plurality of the fourth conductors can be arranged in such a way that only one conductor of the fourth conductors is arranged in the slot of the stator core. However, it is also possible that more than one fourth conductor is arranged in the slot of the stator core in peripheral direction of the stator core.

The first conductor, the second conductor and the third conductor can be deflected and/or twisted according to the above described method wherein, for deflecting and or twisting the respective conductor and/or conductor row, the diameter of the winding core, split tool and/or twisting tool has to be adjusted respectively different tools have to be used.

Further, according to the invention, a twisting device according to claim 1 is provided.

In other words, a twisting device for twisting a winding head of a stator is provided for caring out the above described twisting method, wherein the danger of shorting of the twisted conductor ends of the stator can be easily reduced.

The sliding surface of the cam is some kind of ramp structure for guiding the end section of the first conductor when twisted in peripheral direction or the stator core. Thus, the turning resistance of the twisting tool in peripheral direction of the stator core can be reduced. Furthermore, the end section of the first conductor can be bent in radial direction carefully and/or gently for avoiding any damage of an isolation on the first conductor.

In a preferred embodiment of the invention, the winding core comprises on an outer shell surface a conductor guiding structure on which the at least one cam is arranged, wherein the conductor guiding structure comprises a conductor groove extending in longitudinal direction of the winding core for receiving the second conductor. Preferably, the conductor guiding structure comprises a plurality of grooves and a plurality of cams, wherein the grooves and the cams are arranged alternating to each other. In other words, one groove is between two cams. The groove is designed and arranged for receiving the end section of the conductor which is not twisted by the twisting tool, wherein the end section of the conductor for twisting by the twisting tool is arranged next to the cam.

In a preferred embodiment of the invention, the twisting devise comprises a split tool with a tooth shaped end in longitudinal direction of the split tool, wherein the tooth shaped end comprises at least one receiving slot for receiving the distal end of the end section of the first conductor and a protrusion next to the receiving slot in peripheral direction of the split tool having a sliding surface arranged and designed in such a way, that when turning the split tool in peripheral direction relative to the stator core, the distal end of the end section of the first conductor received in the receiving slot slides over the sliding surface bending the end section of the first conductor radially outward. Hence, the end section of the first conductor can be easily shifted and/or moved in radial direction of the stator core by turning the split tool relative to the stator core in peripheral direction. The end section of the first conductor slides at least partially along the sliding surface, which is preferably configured as a ramp. Thus, the turning resistance of the split tool can be reduced and the end section of the first conductor can be at least partially deflected in radial direction of the stator core gently.

In a preferred embodiment of the invention, the slot of the twisting tool is open on an inner surface facing the longitudinal axis of the twisting tool, respectively facing the end section of the first conductor. Hence, preferably the twisting tool is arranged on the end section of the first conductor before deflecting the end section in radial direction outwardly. After deflecting the end section of the first conductor in radial direction outwardly, the distal end of the end section of the first conductor is deflected and/or shifted into the slot of the twisting tool.

In a preferred embodiment of the invention, the split tool comprises an insertion opening on an outer shell surface of the split tool for receiving a turning lever, and the twisting tool comprises an insertion slit, larger than the insertion opening of the split tool, designed in such a way that a tuning lever can reach through the insertion slit into the insertion opening. Hence, the twisting step can be carried out time shifted to the splitting and/or deflecting step. A turning lever can reach through the insertion slit to the insertion opening. Since, the insertion slit is larger than the insertion opening, when turning the turning lever, the split tool in moved in radial direction shifting and/or deflecting the end section of the first conductor in radial direction, wherein the distal end of the end section of the first conductor introduces into the slot of the twisting tool. After the distal end section of the first conductor is received in the slot of the twisting tool, the split tool and the twisting tool are turned in peripheral direction of the stator core simultaneously by the turning lever.

These and other aspects of the invention will be apparent from and elucidated with reference to the embodiments as per the drawings described hereinafter. In the following description, exemplary embodiments of the invention are explained with reference to the accompanying schematic drawing.
- Fig. 1 to 7: a longitudinal cross section through a stator according to the invention showing the steps for twisting the winding head of the stator,
- Fig. 8: a three-dimensional view of a split tool according to the invention,
- Fig. 9: a three-dimensional view of a winding core according to the invention,
- Fig. 10: a three-dimensional view of the stator with the winding core and the split tool according to the invention,
- Fig. 11: a three-dimensional view of the stator with the winding core, the split tool and the twisting tool according to the invention.

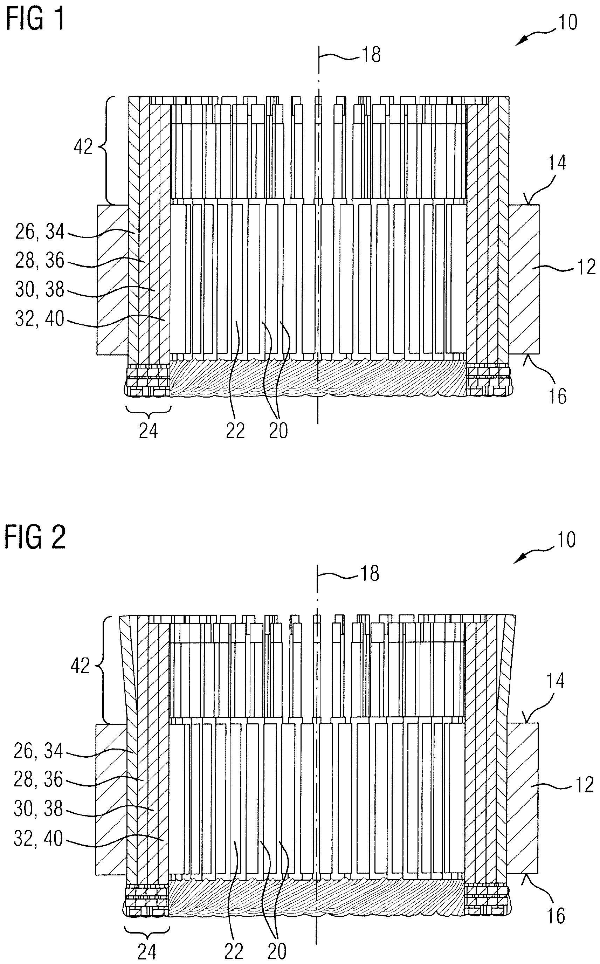

Fig. 1 to 7 show a longitudinal cross section through a stator 10, wherein the different figures show the steps for twisting the winding head 11 of the stator 10.

The stator 10 comprises a hollow cylindrical stator core 12, wherein the stator core 12 comprises a first end face 14 and a second end face 16. The first end face 14 is spaced apart to the second end face 16 in longitudinal direction 18 of the stator core 12. The longitudinal direction 18 of the stator core 12 corresponds to the longitudinal axis of the cylindrical stator core 12. A least a slot 20 is arranged on an inner surface 22 facing the longitudinal axis 18 of the stator core 12, wherein the slot 20 extends between the first end face 14 and the second end face 16 having a slot depth 24 in radial direction of the stator core 12. Presently, the stator core 12 comprises a plurality of slots 20 on the inner surface 22, wherein the slots 20 are spaced to each other in peripheral direction of the stator core 12.

The stator 10 comprises at least a first conductor 26, a second conductor 28, a third conductor 30 and a fourth conductor 32 arranged in the slot 20 in radial direction of the stator core 12 next to each other. In other words, the first conductor 26 is arranged on an imaginary first circle having its circle center on the longitudinal axis 18 of the stator core 12. The second conductor 28 is arranged on an imaginary second circle, having a diameter smaller than the first circle, and having its circle center on the longitudinal axis 18 of the stator core 12. The third conductor 30 is arranged on an imaginary third circle having its circle center on the longitudinal axis 18 of the stator core 12, wherein the diameter of the imaginary third circle is smaller than the diameter of the imaginary second circle of the second conductors 28. The fourth conductor 32 is arranged on an imaginary fourth circle having the same circle center as the imaginary third circle, wherein the diameter of the imaginary fourth circle is smaller than the diameter of the imaginary third circle.

Presently, the first conductor 26, the second conductor 28, the third conductor 30 and the fourth conductor 32 each comprises a plurality of conductors, wherein the plurality conductors are arranged in peripheral direction of the stator core 12 spaced to each other. The plurality of first conductors 26 defines a first conductor row 34 on the imaginary first circle. The second conductors 28 are arranged in peripheral direction of the stator core 12 spaced to each other on the second imaginary circle and define a second conductor row 36. The plurality of third conductors 30 defines a third conductor row 38 and the plurality of fourth conductors 32 defines a fourth conductor row 40.

At least an end section 42 of the first, second third and fourth conductor 26, 28, 30, 32 protrudes and/or extends over the first end face 14 of the stator core 12.

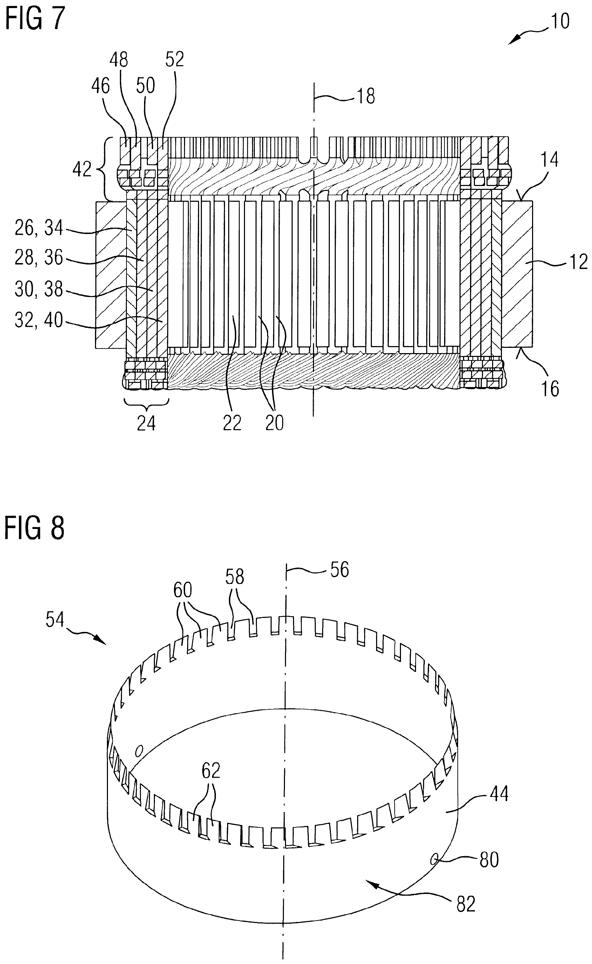

Fig. 2 shows the stator 10 known from Fig. 1, wherein the end section 42 of the first conductor 26 is deflected and/or bent in radial direction of the stator core 12 by a split tool 44 according to Fig. 8. The split tool 44 is designed as a split ring and shown in Fig. 8. The end section 42 of the first conductor 26 is deflected and/or bent over its total length of the end section in radial direction outwardly.

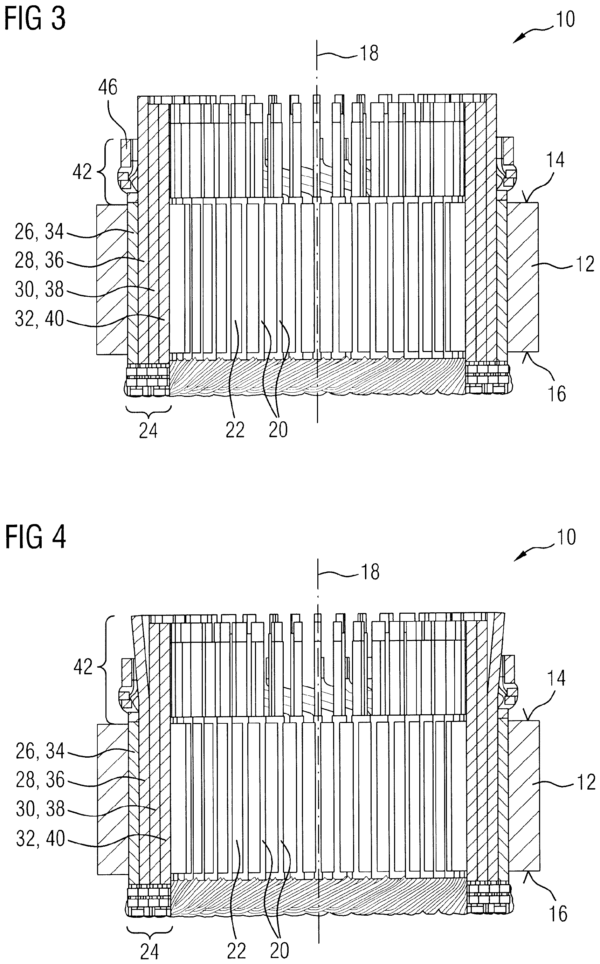

Fig. 3 shows the stator 10 known from Fig. 2 wherein the end section 42 of the first conductor 26 is twisted angular in peripheral direction of the stator core 12 in a first direction which in the present example is a counterclockwise direction according to a view in the direction of the longitudinal axis 18 of the stator core 12. At least a part of the end section 42 of the first conductor 26 between the first end face 14 of the stator core 12 and a distal end 46 of the end section 42 of the first conductor 26 facing away from the first end face 14 is bent and/or necked in radial direction of the stator core 12 outward in such a way, that a distance between the end section 42 of the first conductor 26 and the end section 42 of the second conductor 28 in radial direction of the stator core 12 is at least partially enlarged with respect to the distance of the first conductor 26 and second conductor 28 in radial direction of the stator core 12, which are arranged in the slot 20.

Fig. 4 shows the stator 10 known from Fig. 3, wherein the end section 42 of the second conductor 28 is deflected and/or bent in radial direction of the stator core 12 by the split tool 44. The Split tool 44 is shown in Fig. 8. However, the split tool 44 is different for bending end sections 42 of the different conductor rows. For example, the split tool 44 for deflecting the end section 42 of the second conductor 28 might have a smaller diameter than the one for deflecting the end section 42 of the first conductor 26.

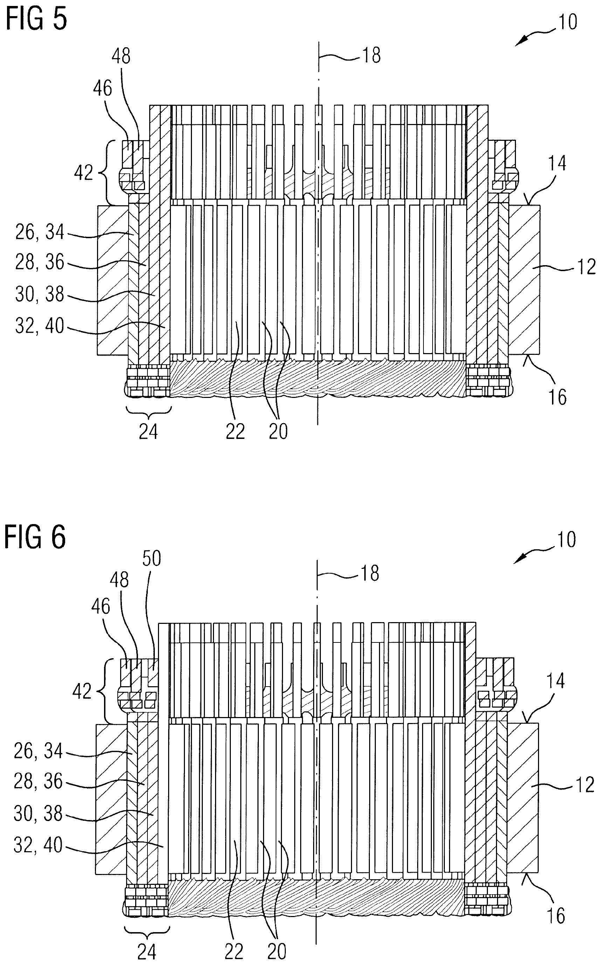

Fig. 5 shows the stator 10 known from Fig. 4, wherein the end section 42 of the second conductor 28 is twisted angular in peripheral direction of the stator core 12 in a second direction which is in the opposite direction of the first direction. The second direction is for example a clockwise direction. At least a part of the end section 42 of the second conductor 28 between the first end face 14 of the stator core 12 and a distal end 48 of the end section 42 of the second conductor 28 facing away from the first end face 14 is bent and/or necked in radial direction of the stator core 12 outward in such a way, that a distance between the end section 42 of the second conductor 28 and the end section 42 of the third conductor 30 in radial direction of the stator core 12 is at least partially enlarged with respect to the distance of the second conductor 28 and third conductor 30 in radial direction of the stator core 12, which are arranged in the slot 20.

Furthermore, only the part of the end section 42 between the distal end 46 of end section 42 of the first conductor 26 and the first end face 14 of the stator 12 comprises an enlarged distance to the end section 42 of the second conductor 28 in radial direction of the stator core 12. Hence, the radial distance between the distal end 46 of the first conductor 26 and the distal end 48 of the second conductor 28 corresponds to the radial distance of the first conductor 26 and the second conductor 28 being arranged in the slot 20 and only the twisted part of the end section 42 of the first conductor 26 between the distal end 46 and the first end face 14 of the stator core 12 is bent radially outward providing an enlarged gap in radial direction to the respective part of the end section 42 of the second conductor 28. Thus, the distal ends 46, 48 of the first conductor 26 and the second conductor 28 can be electrically connected easily.

Fig. 6 shows the stator 10 known from Fig. 5, wherein the end section 42 of the third conductor 30 is twisted in peripheral direction of the stator core 12 in the first direction, resp. counterclockwise, wherein at least a part of the end section 42 of the third conductor 30 between the first end face 14 of the stator core 12 and a distal end 50 of the end section 42 of the third conductor 28 facing away from the first end face 14 is bent and/or necked in radial direction of the stator core 12 outward in such a way, that a distance between the end section 42 of the third conductor 30 and the end section 42 of the fourth conductor 32 in radial direction of the stator core 12 is at least partially enlarged with respect to the distance of the third conductor 30 and the fourth conductor 32 in radial direction of the stator core 12, which are arranged in the slot 20. However, the end section 42 of the third conductor 30 is not deflected in radial direction of the stator core 12 by the split tool 44.

Fig. 7 shows the stator 10 known from Fig. 6, wherein the end section 42 of the fourth conductor 32 is twisted in peripheral direction of the stator core 12 in the second direction, resp. clockwise, without any bending or deflection in radial direction. Hence, the distal end 50 of the third conductor 30 can be easily connected to the distal end 52 of the fourth conductor 32.

Fig. 8 shows the split tool 44. The split tool 44, resp. split ring comprises a hollow cylindrical structure with a tooth shaped end 54 in longitudinal direction 56 of the split tool 44, wherein the tooth shaped end 54 comprises at least one receiving slot 58 for receiving the distal end 46, 48 of the end section 42 of the first conductor 26 or the second conductor 28 and a protrusion 60 next to the receiving slot 58 in peripheral direction of the split tool 44. The protrusion 60 comprises a sliding surface 62 arranged and designed in such a way, that for example when turning the split tool 44 in peripheral direction relative to the stator core 12, the distal end 46 of the end section 42 of the first conductor 26 received in the receiving slot 58 slides over the sliding surface 62 bending the end section 42 of the first conductor 26 radially outward. Hence, the end section 42 of the first conductor 26 can be shifted and/or moved in radial direction of the stator core 12 by turning the split tool 44 relative to the stator core 12 in peripheral direction of the stator core 12 easily. The end section 42 of the first conductor 26 slides at least partially along the sliding surface 62, which is preferably configured as a ramp. Thus, the turning resistance of the split tool 44 can be reduced and the end section 42 of the first conductor 26 can be at least partially deflected in radial direction of the stator core 12 gently.

The diameter of the split tool 44 is different for deflecting the first conductor 26, the second conductor 28 and the third conductor 30, respectively for deflecting the first conductor row 34, second conductor row 36 and third conductor row 38.

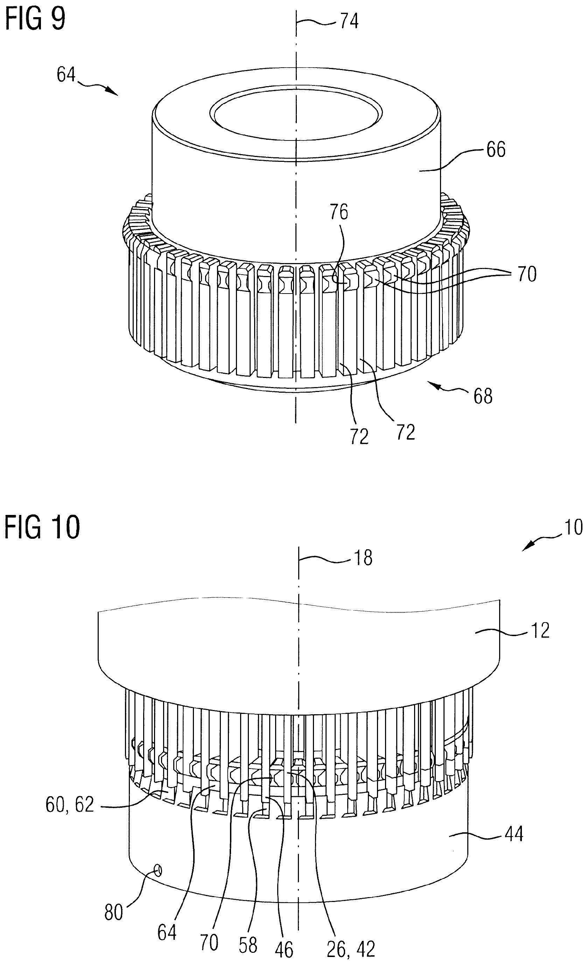

Fig. 9 shows a hollow cylindrical winding core 64. The cylindrical winding core 64 comprises on an outer shell surface 66 a conductor guiding structure 68 on which the at least one cam 70 is arranged. The conductor guiding structure 68 comprises a conductor groove 72 extending in longitudinal direction 74 of the cylindrical winding core 64 for receiving the ends sections 42 of the conductors which should not be twisted during the twisting step. Presently, conductor guiding structure 68 comprises a plurality of conductor grooves 72 and a plurality of cams 70, wherein the conductor grooves 72 and the cams 70 are arranged alternating to each other. In other words, one conductor groove 72 is between two cams 70.

According to the invention, the cam 70 comprises a sliding surface 76 arranged and configured in such a way that by twisting the end section 42 of the conductor to be twisted in peripheral direction of the stator core 12, the end section 42 is at least partially moved over the sliding surface 76 and thereby at least partially bent radially outward. Hence, the cam 70 comprises a ramp structure for guiding the end section 42 of the respective conductor 26, 28, 30 when twisted in peripheral direction of the stator core 12.

The winding core 64 varies for guiding the different conductor rows of the first conductor 26, second conductor 28 and third conductor 30 at least in its diameter and the depth of the conductor groove 72 in radial direction of the cylindrical winding core 64.

Fig. 10 shows the stator 10 with the winding core 64 and the split tool 44. The winding core 64 is arranged on the stator core 12 in such a way, that the end sections 42 of the second 28, third 30 and fourth conductor 32 are guided in the conductor groove 72. The end section 42 of the first conductor 26 is arranged next to the cam 70 of the winding core 64. Furthermore, the split tool 44 is arranged on the winding core 64, wherein the distal end 46 of the end section 42 of the first conductor 26 is inserted in the receiving slot 58. When turning the split tool 44 in peripheral direction of the stator core 12, the distal end 46 of the end section 42 of the first conductor 26 slides along the sliding surface 62 of the protrusion 60, bending and/or necking the end section 42 of the first conductor 26 in radial direction of the stator core 12 outwardly.

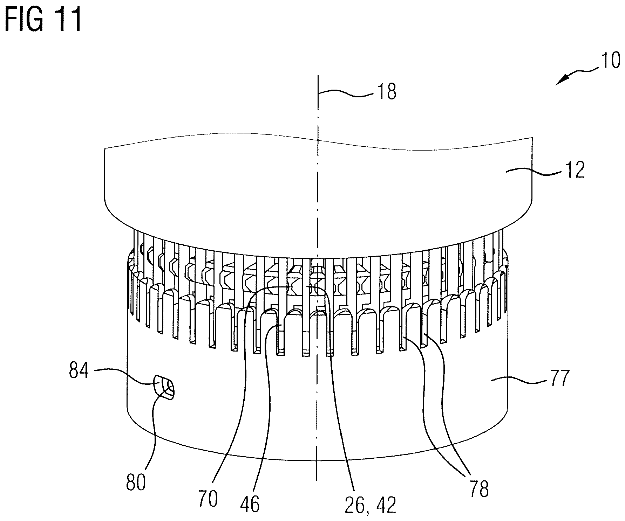

Fig. 11 shows the stator 10 known from Fig. 10 wherein a twisting tool 77 is arranged on the stator 10 respectively the end section 42 of the first conductor 26. The twisting tool comprises at least one slot 78 at a distal end facing the stator core 12 for receiving the distal end 46 of the end section 42 of the first conductor 26. The slot 78 is configured as a cut. Preferably the cut reaches through the wall thickness of the hollow cylindrical twisting tool 77. Such a slot 78 is called an open slot. When deflecting the end section 42 of the first conductor 26 in radial direction outwardly, the distal end 46 of the end section 42 of the first conductor 26 is deflected and/or shifted into the open slot 78 of the twisting tool 77. After that, the twisting tool 77 is moved in peripheral direction of the stator core 12 for twisting the end section 42 of the first conductor 26, wherein during the twisting step, the end section 42 slides along the cam 70 of the winding core 64, bending and/or necking the part of the end section 42 of the first conductor 26, between the first end face 14 of the stator core 12 and the distal end 46 of the end section 42 facing away from the first end face 14, in radial direction of the stator core 12 in such a way, that the distance between the end section 42 of the first conductor 26 and the end section 42 of the second conductor 28 in radial direction of the stator core 12 is at least partially enlarged with respect to the distance of the first 26 and second conductor 28 in radial direction of the stator core 12, which are arranged in the slot 20.

The twisting tool 77 varies for twisting the different conductor rows of the first conductor 26, second conductor 28, third conductor 30 and fourth conductor 32 at least in its diameter.

## Claims

1. Twisting device for twisting a winding head of a stator (10), comprising
a holding device for holding a hollow cylindrical stator core (12) having a first end face (14) and a second end face (16) being spaced apart to each other in longitudinal direction (18) of the stator core (12), and an inner surface (22) facing a longitudinal axis of the stator core (12) with a least one slot (20) on the inner surface (22) extending between the first end face (14) and the second end face (16) having a slot depth (24) in radial direction of the stator core (12), wherein at least a first conductor (26) and a second conductor (28) is positioned in the slot (20) in radial direction of the stator core (12) next to each other, wherein at least an end section (42) of the conductors (26, 28) protrudes and/or extends over the first end face (14) of the stator core (12),
a winding core (64), having at least one cam (70) protruding in radial direction of the winding core (64), arrangeable on the stator core (12) and/or the first end face (14) of the stator core (12) in such a way that the cam (70) is positioned next to the protruding end section (42) in peripheral direction of the stator core (12), and
a twisting tool (77) having at least one slot (78) for receiving a distal end (46) of the end section (42) of the first conductor (26) facing away from the first end face (14) for twisting the end section (42) of the first conductor (26) in peripheral direction of the stator core (12), wherein by twisting the end section (42) of the first conductor (26) in peripheral direction of the stator core (12), the end section (42) of the first conductor (26) is moved over the cam (70), bending and/or necking the end section (42) of the first conductor (26) radially outward in such a way, that a distance between the end section (42) of the first conductor (26) and the end section (42) of the second conductor (28) in radial direction of the stator core (12) is at least partially enlarged with respect to the distance of the first (26) and second conductor (28) in radial direction of the stator core (12), which are arranged in the slot (20), wherein
the cam (70) comprises a sliding surface (76) arranged and configured in such a way that by twisting the end section (42) of the conductor to be twisted in peripheral direction of the stator core (12), the end section (42) is at least partially moved over the sliding surface (76) and thereby at least partially bent radially outward.

2. Device according to claim 1, **characterized in that** the winding core (64) comprises on an outer shell surface (66) a conductor guiding structure (68) on which the at least one cam (70) is arranged, wherein the conductor guiding structure (68) comprises a conductor groove (72) extending in longitudinal direction (74) of the winding core (64) for receiving the second conductor (28).

3. Device according to one of the claims 1 or 2, comprising a split tool (44) with a tooth shaped end (54) in longitudinal direction (56) of the split tool (44), wherein the tooth shaped end (54) comprises at least one receiving slot (58) for receiving the distal end (46) of the end section (42) of the first conductor (26) and a protrusion (60) next to the receiving slot (58) in peripheral direction of the split tool (44) having a sliding surface (62) arranged and designed in such a way, that when turning the split tool (44) in peripheral direction relative to the stator core (12), the distal end (46) of the end section (42) of the first conductor (26) received in the receiving slot (58) slides over the sliding surface (62) bending the end section (42) of the first conductor (26) radially outward.

4. Device according to claim 3, **characterized in that**, the slot (78) of the twisting tool (77) is open on an inner surface facing the longitudinal axis of the twisting tool (77) respectively the end section (42) of the first conductor (26).

5. Device according to one of the claims 1 to 4, **characterized in that**, the split tool (44) comprises an insertion opening (80) on an outer shell surface (82) of the split tool (44) for receiving a turning lever, and the twisting tool (77) comprises an insertion slit (84), larger than the insertion opening (80) of the split tool (44), designed in such a way that an tuning lever can reach through the insertion slit (84) into the insertion opening (80).

6. Method for twisting a winding head of a stator (10), comprising the following steps:
Providing a twisting device for twisting a winding head of a stator (10) according to claim 1;
Providing a hollow cylindrical stator core (12) having a first end face (14) and a second end face (16) being spaced apart to each other in longitudinal direction (18) of the stator core (12), and an inner surface (22) facing a longitudinal axis (18) of the stator core (12) with a least one slot (20) on the inner surface (22) extending between the first end face (14) and the second end face (16) having a slot depth (24) in radial direction of the stator core (12);
positioning at least a first conductor (26) and a second conductor (28) in the slot (20) in radial direction of the stator core (12) next to each other, wherein at least an end section (42) of the conductors (26, 28) protrudes and/or extends over the first end face (14) of the stator core (12);
arranging the winding core (64), having at least one cam (70) protruding in radial direction outward of the winding core (64), on the stator core (12) and/or the first end face (14);
twisting the end section (42) of the first conductor (26) in peripheral direction of the stator core (12), wherein the end section (42) of the first conductor (26) is moved over the cam (70), bending and/or necking a part of the end section (42) of the first conductor (26), between the first end face (14) of the stator core (12) and a distal end (46) of the end section (42) of the first conductor (26) facing away from the first end face (14), in radial direction of the stator core (12) in such a way, that a distance between the end section (42) of the first conductor (26) and the end section (42) of the second conductor (28) in radial direction of the stator core (12) is at least partially enlarged with respect to the distance of the first (26) and second conductor (28) in radial direction of the stator core (12), which are arranged in the slot (20).

7. Method according to claim 6, wherein only the part of the end section (42) between the distal end (46) of the end section (42) of the first conductor (26) and the first end face (14) of the stator core (12) comprises an enlarged distance to the end section (42) of the second conductor (28) in radial direction of the stator core (12).

8. Method according to claim 6 or 7, wherein a twisting device according to claim 3 is provided, **characterized in that**, the end section (42) of the first conductor (26) is at least partially deflected and/or bent in radial direction of the stator core (12) by a split tool (44).

9. Method according to claim 8, **characterized in that**, by deflecting and/or bending the end section (42) of the first conductor (26) in radial direction of the stator core (12), the distal end (46) of the end section (42) is deflected and/or shifted into a slot (78) of a twisting tool (77) for twisting the end section (42) of the first conductor (26) in peripheral direction of the stator core (12).

10. Method according to any of claims 6 to 9, **characterized in that** the end section (42) of the first conductor (26) is twisted in peripheral direction of the stator core by a twisting tool (77) having at least one slot (78) for receiving the distal end (46) of the end section (42).

## Patentansprüche

1. Verdrehvorrichtung zum Verdrehen eines Wicklungskopfes eines Stators (10), Folgendes umfassend:
eine Haltevorrichtung zum Halten eines hohlen zylindrischen Ständerblechpakets (12), das eine erste Endfläche (14) und eine zweite Endfläche (16), die in Längsrichtung (18) des Ständerblechpakets (12) voneinander beabstandet sind, und eine Innenfläche (22), die einer Längsachse des Ständerblechpakets (12) zugewandt ist, aufweist, wobei sich mindestens ein Schlitz (20) an der Innenfläche (22) zwischen der ersten Endfläche (14) und der zweiten Endfläche (16) erstreckt und eine Schlitztiefe (24) in Radialrichtung des Ständerblechpakets (12) aufweist, wobei mindestens ein erster Leiter (26) und ein zweiter Leiter (28) in Radialrichtung des Ständerblechpakets (12) nebeneinander im Schlitz (20) positioniert sind, wobei mindestens ein Endabschnitt (42) der Leiter (26, 28) über die erste Endfläche (14) des Ständerblechpakets (12) vorsteht und/oder sich darüber hinaus erstreckt,
einen Wicklungskern (64), der mindestens einen Nocken (70) aufweist, der in Radialrichtung des Wicklungskerns (64) vorsteht, der derart an dem Ständerblechpaket (12) und/oder der ersten Endfläche (14) des Ständerblechpakets (12) anordenbar ist, dass der Nocken (70) neben dem vorstehenden Endabschnitt (42) in Umfangsrichtung des Ständerblechpakets (12) positioniert ist, und
ein Verdrehwerkzeug (77), das mindestens einen Schlitz (78) zur Aufnahme eines distalen Endes (46) des Endabschnitts (42) des ersten Leiters (26) von der ersten Endfläche (14) abgewandt aufweist, um den Endabschnitt (42) des ersten Leiters (26) in Umfangsrichtung des Ständerblechpakets (12) zu verdrehen, wobei durch Verdrehen des Endabschnitts (42) des ersten Leiters (26) in Umfangsrichtung des Ständerblechpakets (12) der Endabschnitt (42) des ersten Leiters (26) über den Nocken (70) bewegt wird, wodurch der Endabschnitt (42) des ersten Leiters (26) derart radial nach außen gekrümmt und/oder eingeschnürt wird, dass die Entfernung zwischen dem Endabschnitt (42) des ersten Leiters (26) und dem Endabschnitt (42) des zweiten Leiters (28) in Radialrichtung des Ständerblechpakets (12) in Bezug zur Entfernung des ersten (26) und zweiten Leiters (28) in Radialrichtung des Ständerblechpakets (12), die im Schlitz (20) angeordnet sind, zumindest teilweise vergrößert ist,
wobei
der Nocken (70) eine Gleitfläche (76) umfasst, die derart angeordnet und ausgelegt ist, dass durch Verdrehen des Endabschnitts (42) des zu verdrehenden Leiters in Umfangsrichtung des Ständerblechpakets (12) der Endabschnitt (42) zumindest teilweise über die Gleitfläche (76) bewegt und dadurch zumindest teilweise radial nach außen gekrümmt wird.

2. Vorrichtung nach Anspruch 1, **dadurch gekennzeichnet, dass** der Wicklungskern (64) auf einer Außenmantelfläche (66) eine Leiterführungsstruktur (68) umfasst, auf der der mindestens eine Nocken (70) angeordnet ist, wobei die Leiterführungsstruktur (68) eine Leiternut (72) umfasst, die sich zur Aufnahme des zweiten Leiters (28) in Längsrichtung (74) des Wicklungskerns (64) erstreckt.

3. Vorrichtung nach einem der Ansprüche 1 oder 2, umfassend ein Spaltwerkzeug (44) mit einem zahnförmigen Ende (54) in Längsrichtung (56) des Spaltwerkzeugs (44), wobei das zahnförmige Ende (54) mindestens einen Aufnahmeschlitz (58) zur Aufnahme des distalen Endes (46) des Endabschnitts (42) des ersten Leiters (26) und einen Vorsprung (60) neben dem Aufnahmeschlitz (58) in Umfangsrichtung des Spaltwerkzeugs (44) umfasst, der eine Gleitfläche (62) aufweist, die derart angeordnet und ausgestaltet ist, dass beim Drehen des Spaltwerkzeugs (44) in Umfangsrichtung in Bezug zum Ständerblechpaket (12) das im Aufnahmeschlitz (58) aufgenommene distale Ende (46) des Endabschnitts (42) des ersten Leiters (26) über die Gleitfläche (62) gleitet, wodurch der Endabschnitt (42) des ersten Leiters (26) radial nach außen gekrümmt wird.

4. Vorrichtung nach Anspruch 3, **dadurch gekennzeichnet, dass** der Schlitz (78) des Verdrehwerkzeugs (77) an einer der Längsachse des Verdrehwerkzeugs (77) bzw. dem Endabschnitt (42) des ersten Leiters (26) zugewandten Innenfläche offen ist.

5. Vorrichtung nach einem der Ansprüche 1 bis 4, **dadurch gekennzeichnet, dass** das Spaltwerkzeug (44) eine Einsetzöffnung (80) auf einer Außenmantelfläche (82) des Spaltwerkzeugs (44) zur Aufnahme eines Drehhebels umfasst und das Verdrehwerkzeug (77) einen Einsetzschlitz (84) umfasst, der größer ist als die Einsetzöffnung (80) des Spaltwerkzeugs (44) und derart ausgestaltet ist, dass ein Drehhebel durch den Einsetzschlitz (84) in die Einsetzöffnung (80) gelangen kann.

6. Verfahren zum Verdrehen eines Wicklungskopfes eines Stators (10), die folgenden Schritte umfassend:
Vorsehen einer Verdrehvorrichtung zum Verdrehen eines Wicklungskopfes eines Stators (10) nach Anspruch 1;
Vorsehen eines hohlen zylindrischen Ständerblechpakets (12), das eine erste Endfläche (14) und eine zweite Endfläche (16), die in Längsrichtung (18) des Ständerblechpakets (12) voneinander beabstandet sind, und eine Innenfläche (22), die der Längsachse (18) des Ständerblechpakets (12) zugewandt ist, aufweist, wobei sich mindestens ein Schlitz (20) an der Innenfläche (22) zwischen der ersten Endfläche (14) und der zweiten Endfläche (16) erstreckt und eine Schlitztiefe (24) in Radialrichtung des Ständerblechpakets (12) aufweist;
Positionieren mindestens eines ersten Leiters (26) und eines zweiten Leiters (28) in Radialrichtung des Ständerblechpakets (12) nebeneinander in dem Schlitz (20), wobei mindestens ein Endabschnitt (42) der Leiter (26, 28) über die erste Endfläche (14) des Ständerblechpakets (12) vorsteht und/oder sich darüber hinaus erstreckt;
Anordnen des Wicklungskerns (64), der mindestens einen Nocken (70) aufweist, der in Radialrichtung des Wicklungskerns (64) nach außen vorsteht, an dem Ständerblechpaket (12) und/oder der ersten Endfläche (14);
Verdrehen des Endabschnitts (42) des ersten Leiters (26) in Umfangsrichtung des Ständerblechpakets (12), wobei der Endabschnitt (42) des ersten Leiters (26) über den Nocken (70) bewegt wird, wodurch ein Teil des Endabschnitts (42) des ersten Leiters (26) derart zwischen der ersten Endfläche (14) des Ständerblechpakets (12) und dem distalen Ende (46) des Endabschnitts (42) des ersten Leiters (26), das von der ersten Endfläche (14) abgewandt ist, in Radialrichtung des Ständerblechpakets (12) nach außen gekrümmt und/oder eingeschnürt wird, dass die Entfernung zwischen dem Endabschnitt (42) des ersten Leiters (26) und dem Endabschnitt (42) des zweiten Leiters (28) in Radialrichtung des Ständerblechpakets (12) in Bezug zur Entfernung des ersten (26) und zweiten Leiters (28) in Radialrichtung des Ständerblechpakets (12), die im Schlitz (20) angeordnet sind, zumindest teilweise vergrößert ist.

7. Verfahren nach Anspruch 6, wobei nur der Teil des Endabschnitts (42) zwischen dem distalen Ende (46) des Endabschnitts (42) des ersten Leiters (26) und der ersten Endfläche (14) des Ständerblechpakets (12) eine vergrößerte Entfernung zum Endabschnitt (42) des zweiten Leiters (28) in Radialrichtung des Ständerblechpakets (12) umfasst.

8. Verfahren nach Anspruch 6 oder 7, wobei eine Verdrehvorrichtung nach Anspruch 3 vorgesehen ist, **dadurch gekennzeichnet, dass** der Endabschnitt (42) des ersten Leiters (26) durch ein Spaltwerkzeug (44) in Radialrichtung des Ständerblechpakets (12) zumindest teilweise abgelenkt und/oder gekrümmt wird.

9. Verfahren nach Anspruch 8, **dadurch gekennzeichnet, dass** durch Ablenken und/oder Krümmen des Endabschnitts (42) des ersten Leiters (26) in Radialrichtung des Ständerblechpakets (12) das distale Ende (46) des Endabschnitts (42) zum Verdrehen des Endabschnitts (42) des ersten Leiters (26) in Umfangsrichtung des Ständerblechpakets (12) in einen Schlitz (78) eines Verdrehwerkzeugs (77) abgelenkt und/oder verschoben wird.

10. Verfahren nach einem der Ansprüche 6 bis 9, **dadurch gekennzeichnet, dass** der Endabschnitt (42) des ersten Leiters (26) durch ein Verdrehwerkzeug (77), das mindestens einen Schlitz (78) zur Aufnahme des distalen Endes (46) des Endabschnitts (42) aufweist, in Umfangsrichtung des Ständerblechpakets verdreht wird.

## Revendications

1. Dispositif d'enroulement pour enrouler une tête de bobinage d'un stator (10), comprenant
un dispositif de retenue pour retenir un noyau de stator cylindrique creux (12) ayant une première face d'extrémité (14) et une seconde face d'extrémité (16) espacées l'une de l'autre dans une direction longitudinale (18) du noyau de stator (12), et une surface intérieure (22) faisant face à un axe longitudinal du noyau de stator (12) avec au moins une fente (20) sur la surface intérieure (22) s'étendant entre la première face d'extrémité (14) et la seconde face d'extrémité (16), ayant une profondeur de fente (24) dans la direction radiale du noyau de stator (12), dans lequel au moins un premier conducteur (26) et un second conducteur (28) sont positionnés dans la fente (20) dans la direction radiale du noyau de stator (12) l'un à côté de l'autre, dans lequel au moins une section d'extrémité (42) des conducteurs (26, 28) fait saillie et/ou s'étend par-dessus la première face d'extrémité (14) du noyau de stator (12),
un noyau de bobinage (64), ayant au moins une came (70) faisant saillie dans la direction radiale du noyau de bobinage (64), agençable sur le noyau de stator (12) et/ou la première face d'extrémité (14) du noyau de stator (12) de manière telle que la came (70) soit positionnée à côté de la section d'extrémité faisant saillie (42) dans une direction périphérique du noyau de stator (12), et
un outil d'enroulement (77) ayant au moins une fente (78) pour recevoir une extrémité distale (46) de la section d'extrémité (42) du premier conducteur (26) faisant face à l'opposé de la première face d'extrémité (14) pour enrouler la section d'extrémité (42) du premier conducteur (26) dans la direction périphérique du noyau de stator (12), dans lequel, en enroulant la section d'extrémité (42) du premier conducteur (26) dans la direction périphérique du noyau de stator (12), la section d'extrémité (42) du premier conducteur (26) est mue par-dessus la came (70), cintrant et/ou rétreignant la section d'extrémité (42) du premier conducteur (26) radialement vers l'extérieur de manière telle qu'une distance entre la section d'extrémité (42) du premier conducteur (26) et la section d'extrémité (42) du second conducteur (28) dans la direction radiale du noyau de stator (12) soit au moins partiellement agrandie par rapport à la distance des premier (26) et second (28) conducteurs dans la direction radiale du noyau de stator (12), qui sont agencés dans la fente (20), dans lequel
la came (70) comprend une surface coulissante (76) agencée et configurée de manière telle que, en enroulant la section d'extrémité (42) du conducteur pour être enroulée dans la direction périphérique du noyau de stator (12), la section d'extrémité (42) soit au moins partiellement mue par-dessus la surface coulissante (76) et ainsi au moins partiellement cintrée radialement vers l'extérieur.

2. Dispositif selon la revendication 1, **caractérisé en ce que** le noyau de bobinage (64) comprend, sur une surface d'enveloppe extérieure (66), une structure de guidage de conducteur (68) sur laquelle l'au moins une came (70) est agencée, dans lequel la structure de guidage de conducteur (68) comprend une rainure de conducteur (72) s'étendant dans la direction longitudinale (74) du noyau de bobinage (64) pour recevoir le second conducteur (28).

3. Dispositif selon l'une des revendications 1 ou 2, comprenant un outil de séparation (44) avec une extrémité en forme de dent (54) dans la direction longitudinale (56) de l'outil de séparation (44), dans lequel l'extrémité en forme de dente (54) comprend au moins une fente de réception (58) pour recevoir l'extrémité distale (46) de la section d'extrémité (42) du premier conducteur (26) et une saillie (60) à côté de la fente de réception (58) dans la direction périphérique de l'outil de séparation (44) ayant une surface coulissante (62) agencée et conçue de manière telle que, lors de la rotation de l'outil de séparation (44) dans la direction périphérique relativement au noyau de stator (12), l'extrémité distale (46) de la section d'extrémité (42) du premier conducteur (26) reçue dans la fente de réception (58) coulisse par-dessus la surface coulissante (62), cintrant la section d'extrémité (42) du premier conducteur (26) radialement vers l'extérieur.

4. Dispositif selon la revendication 3, **caractérisé en ce que** la fente (78) de l'outil d'enroulement (77) est ouverte sur une surface intérieure faisant face à l'axe longitudinal de l'outil d'enroulement (77), respectivement la section d'extrémité (42) du premier conducteur (26).

5. Dispositif selon l'une des revendications 1 à 4, **caractérisé en ce que** l'outil de séparation (44) comprend une ouverture d'insertion (80) sur une surface d'enveloppe extérieure (82) de l'outil de séparation (44) pour recevoir un levier de rotation, et l'outil d'enroulement (77) comprend une entaille d'insertion (84), plus grande que l'ouverture d'insertion (80) de l'outil de séparation (44), conçue de manière telle qu'un levier de rotation puisse pénétrer, à travers l'entaille d'insertion (84), dans l'ouverture d'insertion (80).

6. Procédé pour enrouler une tête de bobinage d'un stator (10), comprenant les étapes suivantes :
la fourniture d'un dispositif d'enroulement pour enrouler une tête de bobinage d'un stator (10) selon la revendication 1,
la fourniture d'un noyau de stator cylindrique creux (12) ayant une première face d'extrémité (14) et une seconde face d'extrémité (16) espacées l'une de l'autre dans la direction longitudinale (18) du noyau de stator (12), et une surface intérieure (22) faisant face à un axe longitudinal (18) du noyau de stator (12) avec au moins une fente (20) sur la surface intérieure (22) s'étendant entre la première face d'extrémité (14) et la seconde face d'extrémité (16), ayant un profondeur de fente (24) dans la direction radiale du noyau de stator (12) ;
le positionnement au moins d'un premier conducteur (26) et d'un second conducteur (28) dans la fente (20) dans la direction radiale du noyau de stator (12) l'un à côté de l'autre, dans lequel au moins une section d'extrémité (42) des conducteurs (26, 28) fait saillie et/ou s'étend par-dessus la première face d'extrémité (14) du noyau de stator (12) ;
l'agencement du noyau de bobinage (64), ayant au moins une came (70) faisant saillie dans la direction radiale vers l'extérieur du noyau de bobinage (64), sur le noyau de stator (12) et/ou la première face d'extrémité (14) ;
l'enroulage de la section d'extrémité (42) du premier conducteur (26) dans la direction périphérique du noyau de stator (12), dans lequel la section d'extrémité (42) du premier conducteur (26) est mue par-dessus la came (70), cintrant et/ou rétreignant une partie de la section d'extrémité (42) du premier conducteur (26), entre la première face d'extrémité (14) du noyau de stator (12) et une extrémité distale (46) de la section d'extrémité (42) du premier conducteur (26) faisant face à l'opposé de la première face d'extrémité (14), dans la direction radiale du noyau de stator (12), de manière telle qu'une distance entre la section d'extrémité (42) du premier conducteur (26) et la section d'extrémité (42) du second conducteur (28) dans la direction radiale du noyau de stator (12) soit au moins partiellement agrandie par rapport à la distance des premier (26) et second (28) conducteurs dans la direction radiale du noyau de stator (12), qui sont agencés dans la fente (20).

7. Procédé selon la revendication 6, dans lequel seulement la partie de la section d'extrémité (42) entre l'extrémité distale (46) de la section d'extrémité (42) du premier conducteur (26) et la première face d'extrémité (14) du noyau de stator (12) comprend une distance agrandie jusqu'à la section d'extrémité (42) du second conducteur (28) dans la direction radiale du noyau de stator (12).

8. Procédé selon la revendication 6 ou 7, dans lequel un dispositif d'enroulement selon la revendication 3 est prévu, **caractérisé en ce que** la section d'extrémité (42) du premier conducteur (26) est au moins partiellement défléchie et/ou cintrée dans la direction radiale du noyau de stator (12) par un outil de séparation (44).

9. Procédé selon la revendication 8, **caractérisé en ce que**, en défléchissant et/ou cintrant la section d'extrémité (42) du premier conducteur (26) dans la direction radiale du noyau de stator (12), l'extrémité distale (46) de la section d'extrémité (42) est défléchie et/ou déplacée dans une fente (78) d'un outil d'enroulement (77) pour enrouler la section d'extrémité (42) du premier conducteur (26) dans la direction périphérique du noyau de stator (12).

10. Procédé selon l'une quelconque des revendications 6 à 9, **caractérisé en ce que** la section d'extrémité (42) du premier conducteur (26) est enroulée dans la direction périphérique du noyau de stator par un outil d'enroulement (77) ayant au moins une fente (78) pour recevoir l'extrémité distale (46) de la section d'extrémité (42).
